# EUROPEAN PATENT APPLICATION

(11) **EP 0 675 312 A1**
(43) Date of publication of application: **04.10.1995**
(21) Application number: 95103154.1
(22) Date of filing: 06.03.1995
(51) Int. Cl.: F16L 41/00, F24D 3/10, F16L 41/06

(54) **Double distribution manifold for water heater plants of a standardised type**

(30) Priority: 31.03.1994 IT UD940049
(71) Applicant: Miculan, Stefano, I-33033 Codroipo (UD) (IT); Miculan, Carlo, I-33033 Codripo (UD) (IT)
(72) Inventor: Valerio, Gianni, I-33100 Udine (IT)
(74) Representative: Petraz, Gilberto Luigi

(57) **Abstract**

Double distribution manifold for water heater plants of a standardised type, which is suitable to meet the requirements of a plurality of users and comprises two single manifolds (11a-11b) associated respectively with the outward delivery pipe and the return flow pipe of the heat generator or heat exchanger of the water heater plant, the single manifolds (11a-11b) being separated and fixed solidly together and including a plurality of tubes (12a-12b) for connection to the branch lines which serve the various users, the two single manifolds (11a-11b) being cylindrical and installed parallel to each other, the terminal free segments (20) of each tube (12a-12b) lying on the same lengthwise plane, the tubes (12) associated with at least one manifold (11) including a change of direction.

## Description

This invention concerns a double distribution manifold for water heater plants of a standardised type, as set forth in the main claim.

The double distribution manifold for water heater plants of a standardised type is employed in heating plants so as to enclose in one single body all the branch lines for outward delivery and return flow which are associated with the heat generators or heat exchangers.

These double distribution manifolds are provided in a range of sizes and of numbers of usage lines and are employed when it is necessary to meet the requirements of a plurality of users with one single heat generator or heat exchanger; these users may be independent dwellings or different sections of one dwelling or of the same room.

The double manifold according to the invention is used advantageously to connect the various distribution lines for heating purposes and for hot and cold mixed plants.

In the heating plants of the state of the art the pipes which run out from the heat generator or heat exchanger and the pipes for the return flow thereto are connected to separate respective manifolds for the outward delivery pipes and the return flow pipes.

The use of two independent separate manifolds entails a plurality of problems; in particular, the embodiment using two independent manifolds requires a considerable volume of space and needs elements to support and fix the manifolds, thus increasing the cost.

Moreover, the embodiment of two independent manifolds often involves problems of adaptation and lodgement as regards the volume of the manifolds.

Furthermore, the arrangement of the two manifolds makes it necessary to have recourse to deviations and/or superimposing of pipes for connection to the various branch lines.

These deviations and/or superimposing of pipes not only entail a waste of pipes but also require a series of bends, which involve an increase in the overall cost of the plant.

Moreover, the installation of these deviations causes a considerable increase of the installation times, with resulting increases in the labour cost.

Besides, the insulation of these two single manifolds becomes expensive since each manifold is insulated separately.

Disclosures have also been made of double manifolds consisting of two single manifolds, namely an outward single delivery manifold and a single return flow manifold respectively, which are solidly associated with each other to form one single body which is suitably insulated to prevent dispersion of heat.

These double manifolds are embodied with pipes which have a rectangular cross-section and in which the wall between the two superimposed pipes is common to them both.

This wall has to be made advantageously of a heat insulating material so as to prevent dispersion of heat between the hot fluid and the cold fluid.

These pipes with a rectangular cross-section are harder to make and to work than pipes with a circular cross-section.

Moreover, the ratio between the outer surface and the cross-section of the bore of the pipes with a rectangular cross-section is less favourable than that of pipes with a circular cross-section inasmuch as they have a greater outer surface, given an equal cross-section of their bore; this entails greater outward dispersion of heat, which has to be reduced by greater insulation of the double manifold, with resulting greater setting-up costs.

Moreover, the common wall between the two superimposed pipes is also a source of loss of heat from the hot fluid to the cold fluid.

Furthermore, these double manifolds entail a plurality of problems and drawbacks because the pipes connected to the tubes on the single manifolds have to be deviated and superimposed.

Double manifolds have therefore been disclosed in which the single manifold for the outward delivery lines and the single manifold for the return flow lines are superimposed on each other and the tubes running from the lower single manifold pass through the upper single manifold from one side to the other or viceversa.

In this way the tubes are arranged so as to be aligned on one and the same lengthwise plane.

This double manifold, however, entails construction problems linked to the fact that the tubes of the lower single manifold have to pass through the upper single manifold, thereby requiring extra work in the embodiment of the double manifold, and this extra work increases the cost of the finished product.

Besides, narrowed areas are created in this type of manifold and increase the losses of load, and there are also occurrences of undesired, unfavourable heat exchange.

Moreover, extra processing is required to ensure a good seal engagement between the tubes leaving the double manifold with a rectangular cross-section and the manifold itself.

The present applicants have designed, tested and embodied this invention to overcome the shortcomings of the state of the art and to achieve further advantages.

This invention is set forth and characterised in the main claim, while the dependent claims describe variants of the idea of the main embodiment.

The purpose of this invention is to provide a double distribution manifold for water heater plants of a standardised type, the double manifold being capable of being embodied in a range of sizes and of numbers of user lines and consisting of one single body and having its inlet and outlet tubes, for connection to the user branch lines, aligned and lying on one single lengthwise plane.

The double manifold according to the invention can have all its tubes arranged on the same side or partly on one side and partly on the opposite side according to the installation requirements; in the former case the tubes advantageously lie substantially at the same level.

The double manifold according to the invention comprises in one single body two single manifolds distanced from each other and able to collect and convey two fluids, or the same one fluid, having different temperatures, thus restricting considerably the heat exchange between the single manifolds.

The double distribution manifold according to the invention is simple and economical to embody and practical to install.

The double distribution manifold according to the invention employs cylindrical single manifolds which require lower purchasing and production costs than manifolds with a polygonal cross-section and have a better ratio of outer surface to cross-section of their bore.

Moreover, the cross-section of the bore of the single cylindrical manifolds in the double manifold according to the invention is wholly free for the passage of the fluid since the single manifolds include no inner obstacle, thus achieving very low losses of load and therefore a greater rate of flow when other conditions are equal.

Besides, the cylindrical shape maintains a homogeneous flow without the slowing down typical of corners.

The double manifold according to the invention, given equal services, requires less insulation than the manifolds with a polygonal cross-section of the state of the art.

The double manifold according to the invention comprises two single independent manifolds having a circular cross-section, which lie side-by-side with their axes parallel and are solidly associated with each other by means of suitable connecting brackets.

According to a variant a panel of heat insulation material is inserted into the interspace defined between the two side-by-side manifolds so as to reduce to a minimum the heat exchange between the two same or different fluids circulating respectively at different temperatures within those manifolds.

Each single manifold includes a plurality of tubes staggered lengthwise in relation to the coordinated plurality of tubes included in the other single manifold, the terminal free segment of these tubes being positioned in one and the same lengthwise plane.

According to a variant the tubes are arranged on one surface and on the opposite surface of the double manifold according to the invention.

In this case the tubes may be not necessarily staggered lengthwise and may lie on one and the same transverse plane.

In the double manifold according to the invention the tubes associated with at least one of the two single manifolds include a suitable change of direction, which brings the terminal free segment of these tubes to the same lengthwise plane of positioning as the terminal free segment of the tubes associated with the other single manifold.

The change of direction may be produced equally well with a moulded curve, with a welded bend or with a threaded connection.

According to a first form of embodiment of the invention the two manifolds having a circular cross-section are arranged on the same plane, and the lengthwise plane of positioning of the terminal free segments of the tubes is advantageously perpendicular to the plane of positioning of the single manifolds.

According to another form of embodiment the two manifolds are arranged on the same plane, and the terminal free segments of the tubes lie on a plane substantially parallel to the plane of positioning of the manifolds but suitably distanced therefrom.

According to yet another form of embodiment the two manifolds are arranged parallel but offset horizontally and at least partly vertically so as to define one manifold positioned in a lower position and one manifold positioned in an higher position.

The plane of positioning of the terminal free segments of the tubes coincides advantageously with the vertical plane passing substantially through the axis of the manifold in the lower position.

The inlet and outlet tube connections included respectively on the single delivery manifold and on the single return flow manifold may be positioned longitudinally and radially to the respective manifold to suit the various installation requirements.

According to a variant the double manifold according to the invention includes at its two lengthwise ends connection means, for instance of a flange type, to make possible the embodiment of a multiple manifold according to the invention having a desired length by assembling together lengthwise a plurality of double modular manifolds.

According to another variant the terminal portion of the manifolds is tapered or substantially tapered and advntageously includes connection means.

So as to restrict outward dispersion of heat the double manifold according to the invention is advantageously associated with an outer containing body made of a heat insulating material and containing advantageously within itself seatings to lodge the single manifolds; this containing body is advantageously covered with a sheet of aluminium to prevent heat dispersion and is made advantageously of two combinable elements which are associated together to enclose the double manifold according to the invention.

According to a variant this outer containing body includes a panel of an insulation material which is placed between the two manifolds to reduce internal heat exchange.

According to the invention the double manifolds are pre-arranged according to modular sizes and conditions, and each double manifold meets a well defined range of requirements.

The attached figures are given as a non-restrictive example and show some preferred embodiments of the invention as follows:-
- Fig.1a: shows with a three-dimensional drawing a double manifold according to the invention with the two single manifolds lying on the same horizontal plane;
- Fig.1b: shows a variant of the double manifold of Fig.1a;
- Fig.2a: shows in an enlarged scale a cross-section of the double manifold of Fig.1a according to the invention, the manifold being installed within a containing body;
- Fig.2b: shows in an enlarged scale a cross-section of the double manifold of Fig.1b according to the invention, the manifold being installed within a containing body;
- Fig.3: shows a cross-section of a double manifold according to the invention with the two single manifolds lying on the same vertical plane;
- Fig.4: shows a cross-section of a double manifold according to the invention with the two single manifolds offset from each other on the vertical plane and horizontal plane;
- Fig.5: shows a cross-section of a variant of the double manifold of Fig.2a according to the invention.

In the attached figures the reference number 10 denotes generally a double distribution manifold for water heater plants of a standardised type according to the invention.

The double manifold 10 according to the invention comprises two single cylindrical manifolds, 11a and 11b respectively, which lie side-by-side and parallel to each other and are associated respectively with a pipe for outward delivery of fluid from, and a pipe for return flow of fluid to, the heat generator or heat exchanger of a water heater plant.

According to a variant the single manifolds 11 have a polygonal cross-section.

The single manifolds 11 forming the double manifold 10 according to the invention may be made of a metal, of plastic or of another suitable material.

The connections for the inward flow and outward delivery included respectively on the single outward delivery manifold 11a-11b and on the single return flow manifold 11b-11a may be positioned longitudinally and laterally to, and in particular radially to, the respective single manifold 11 so as to suit the various installation requirements.

According to a variant the double manifold 10 according to the invention is of a modular type and has at its two lengthwise ends connection means, for instance of a flange type, so as to form a double manifold 10 according to the invention of a desired length.

According to another variant shown in Fig.1a the single manifolds 11a-11b forming the double manifold 10 according to the invention include at their lengthwise ends connecting segments 28 which are at least partly tapered.

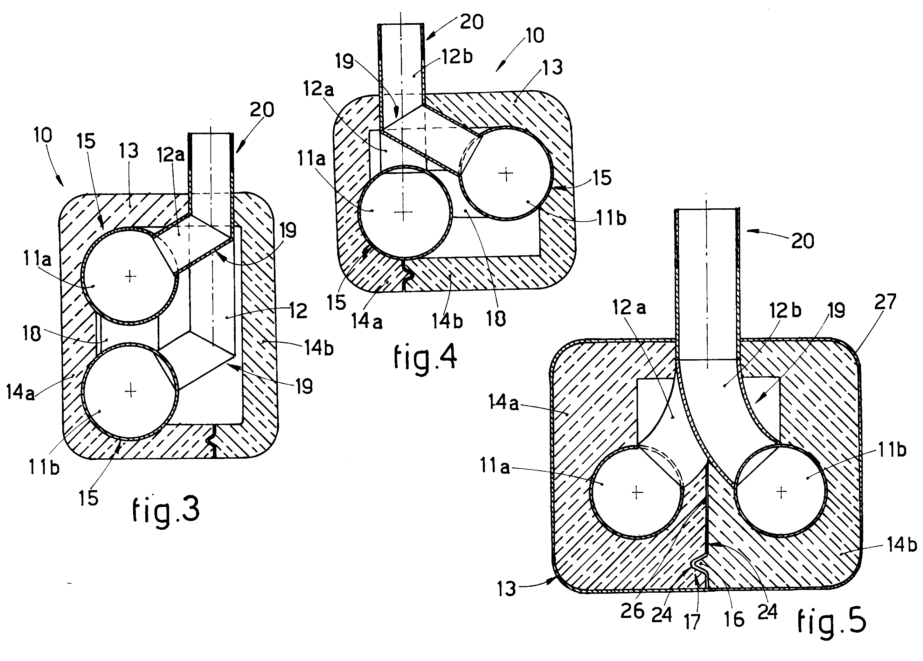

In the examples of Figs.1a and 2a these two single manifolds 11a and 11b are connected to form one single body by means of connecting brackets 18 fixed by welding, for instance, to the outer surface of the single manifolds 11a-11b.

Each single manifold 11 includes a plurality of outflow or inflow tubes 12 to which are connected the branch pipelines running to and from the various users served by the heat generator or heat exchanger.

In the double manifold 10 according to the invention terminal free segments 20 of the respective outflow/inflow tubes 12, to which are fitted the respective branch pipelines, are aligned on the same lengthwise plane parallel to the axes of the single manifolds 11.

These tubes 12 are advantageously arranged at an equal distance apart; the tubes 12a associated with one single manifold 11a are suitably and evenly staggered in relation to tubes 12b associated with the other single manifold 11b so as to prevent any contact between the branch pipelines which are connected to the tubes 12.

In this case all the tubes 12 lie substantially at the same level.

According to a variant which is not shown here, the tubes 12a associated with one single manifold 11a and the tubes 12b associated with the other single manifold 11b are installed on two opposite surfaces of the double manifold 10 according to the invention.

In this case the tubes 12a and the tubes 12b can lie two-by-two on the same transverse plane of the double manifold 10 according to the invention without any danger of contacts.

The double manifold 10 according to the invention is enclosed advantageously in a containing body 13 made of a heat insulating material so as to reduce to a minimum the outward dispersion of heat.

According to a special form of embodiment the containing body 13 is in turn covered outwardly by a protective aluminium sheet 27.

The containing body 13 in this case is embodied with two half-shells 14a and 14b containing inner lodgement seats 15, in which the relative single manifolds 11 are positioned.

So as to ensure a good seal engagement, the half-shells 14 include in their connecting edges 24 ridges 16 which cooperate with hollows 17 of a mating shape in the connecting edges 24 of the other half-shells 14.

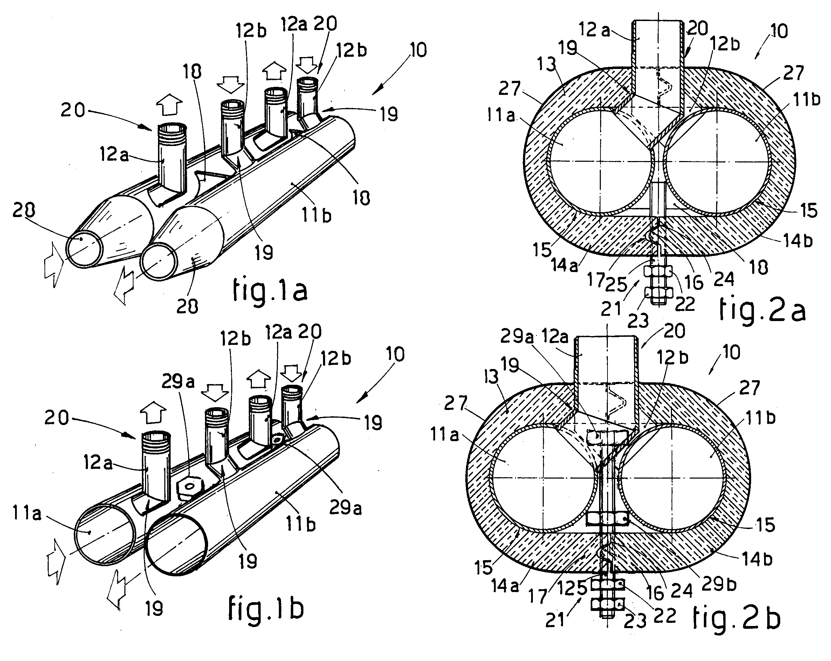

In a first preferred form of embodiment of the double manifold 10 according to the invention, as shown in Figs.1 and 2, the two single manifolds 11a-11b are placed on the same horizontal plane of positioning and the terminal free segments 20 of the tubes 12 lie on a substantially median vertical plane between the two single manifolds 11a-11b.

In this case the tubes 12a and the tubes 12b consist of a segment of tube including a change of direction 19 and comprising here a sharp corner, and also including a terminal free segment 20 for connection to the branch pipelines.

In this case the terminal free connecting segment 20 has a male thread.

According to some special forms of embodiment the terminal free connecting segment 20 of the tubes 12 has a female thread, or is flanged, or is connected with a spigot-and-socket joint or with a compression joint, etc.

In Fig.5 the change of direction 19 in the tubes 12 is rounded, and this rounded portion may consist, for instance, of a moulded curve or a welded bend.

In the double manifold 10 according to the invention the changes of direction 19 may be embodied with moulded curves, welded bends, threaded connections or other analogous means of the state of the art.

In the form of embodiment shown in Fig.5 the two single manifolds 11a and 11b are separated by a panel 26 made of a heat insulating material so as to reduce heat exchange between the two single manifolds 11a-11b.

In the form of embodiment shown in Fig.3 the double manifold 10 according to the invention has two single manifolds 11a-11b superimposed vertically on each other and lying on the same vertical plane.

In this case the tubes 12a and 12b are alternated and are all aligned in one vertical plane of positioning parallel to the plane of positioning of the single manifolds 11a-11b but suitably distanced from that plane.

In the form of embodiment shown in Fig.4 the two single manifolds 11a-11b forming the double manifold 10 according to the invention are positioned parallel to each other but offset both horizontally and vertically and are reciprocally fixed together by connecting brackets 18.

In this case the tubes 12a associated with the lower single manifold 11a are straight whereas the tubes 12b associated with the higher single manifold 11b include a change of direction 19 whereby the terminal free segments 20 of those tubes 12b lie on the vertical plane containing the tubes 12a.

The various forms of embodiment which have been shown here merely as a non-restrictive example illustrate clearly the functional and practical nature of the various models of double manifold 10 which can be provided according to the invention so as to suit the shape and dimensions of the space in which that double manifold 10 has to be installed.

Fig.2a shows also the means 21 for fixture of the double manifold 10 according to the invention; these means 21 make possible a quick and safe installation of the double manifold 10 according to the invention on suitable positioning and supporting brackets, which are not shown here.

In this case these fixture means 21 include threaded pins 25, which are clamped to the positioning and supporting brackets by means of nuts 22 and locknuts 23

These fixture means 21 enable also the double manifold 10 according to the invention to be correctly levelled.

According to the variant shown in Figs.1b and 2b the two single manifolds 11a and 11b are connected together to form one single body by means of pairs of connecting nuts 29, namely an upper nut 29a and a lower 29b, which are welded at positions between the two manifolds 11a and 11b and cooperate with a threaded pin 125.

The threaded pin 125 is also used advantageously to fix the double manifold 10 to positioning and supporting brackets, which are not shown here.

In this case threaded pin 125 is not in contact with the single manifolds 11a-11b.

According to a variant, which is not shown here, the threaded pin 125 is in contact with at least one of the single manifolds 11a-11b.

This form of embodiment is simple, economical and very practical to make and to install.

It is possible to alter the form and/or the sizes and proportions without departing thereby from the scope of the invention.

The double manifold 10 according to the invention can be produced by casting, welding, brazing or with adhesives.

## Claims

1. Double distribution manifold for water heater plants of a standardised type, which is suitable to meet the requirements of a plurality of users and comprises two single manifolds (11a-11b) associated respectively with the outward delivery pipe and the return flow pipe of the heat generator or heat exchanger of the water heater plant, the single manifolds (11a-11b) being separated and fixed solidly together and including a plurality of tubes (12a-12b) for connection to the branch pipelines which serve the various users, the double manifold being characterised in that the two single manifolds (11a-11b) are cylindrical and installed parallel to each other, and in that the terminal free segments (20) of each tube (12a-12b) lie on the same lengthwise plane and in that the tubes (12) associated with at least one manifold (11) include a change of direction.

2. Double manifold as in Claim 1, in which the terminal free segments (20) of each tube (12a-12b) are positioned on the same side of the double manifold (10) and lie substantially at the same level.

3. Double manifold as in Claim 1, in which the terminal free segments (20) of each tube (12a-12b) are positioned on the opposite sides of the double manifold (10).

4. Double manifold as in any of Claims 1, 2 or 3, in which the two single manifolds (11a-11b) lie on the same plane and the tubes (12a-12b) lie on a plane perpendicular to and substantially between the two single manifolds (11a-11b).

5. Double manifold as in any of Claims 1 to 3 inclusive, in which the two single manifolds (11a-11b) lie on the same plane and the tubes (12a-12b) lie on a plane substantially parallel to, but displaced by a desired distance from, the plane of positioning of the two single manifolds (11a-11b).

6. Double manifold as in any of Claims 1 to 3 inclusive, in which the two single manifolds (11a-11b) are offset from each other on the vertical plane and on the horizontal plane and the tubes (12a-12b) lie on a vertical plane substantially passing through the axis of the lower single manifold (11).

7. Double manifold as in any claim hereinbefore, which cooperates with a containing body (13) made of a heat insulating material.

8. Double manifold as in any claim hereinbefore, in which the single manifolds (11a-11b) have their terminal segment (28) substantially tapered.

9. Double manifold as in any claim hereinbefore, in which the two single manifolds (11a-11b) are united by connecting brackets (18).

10. Double manifold as in any of Claims 1 to 8 inclusive, in which the two single manifolds (11a-11b) are connected together by nuts (29) cooperating with a threaded rod (125) associated with fixture means (21).
